(19) Europäisches Patentamt
European Patent Office
Office européen des brevets

(11) EP 1 541 024 B2

(12) NEUE EUROPÄISCHE PATENTSCHRIFT
Nach dem Einspruchsverfahren

(45) Veröffentlichungstag und Bekanntmachung des Hinweises auf die Entscheidung über den Einspruch:
**18.07.2012 Patentblatt 2012/29**

(45) Hinweis auf die Patenterteilung:
**15.10.2008 Patentblatt 2008/42**

(21) Anmeldenummer: **05006154.8**

(22) Anmeldetag: **15.12.1998**

(51) Int Cl.:
***A01N 43/40*** *(2006.01)*

# (54) Fungizide Mischungen auf der Basis von Amidverbindungen

Fungicidal mixtures based on pyridine carboxamide compounds

Mélanges fongicides à base de composés pyridine carboxamides

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **18.12.1997 DE 19756379**

(43) Veröffentlichungstag der Anmeldung:
**15.06.2005 Patentblatt 2005/24**

(60) Teilanmeldung:
**08015067.5 / 1 989 941**
**10001728.4 / 2 186 409**

(62) Dokumentnummer(n) der früheren Anmeldung(en) nach Art. 76 EPÜ:
**01129795.9 / 1 201 126**
**98966623.5 / 1 039 803**

(73) Patentinhaber: **BASF SE**
**67056 Ludwigshafen (DE)**

(72) Erfinder:
- **Schelberger, Klaus**
  **67161 Gönnheim (DE)**
- **Scherer, Maria**
  **76829 Landau (DE)**
- **Eicken, Karl, Dr.**
  **67157 Wachenheim (DE)**
- **Hampel, Manfred, Dr.**
  **67435 Neustadt (DE)**
- **Ammermann, Eberhard, Dr.**
  **64646 Heppenheim (DE)**
- **Lorenz, Gisela, Dr.**
  **67434 Hambach Hambach (DE)**
- **Strathmann, Siegfried, Dr.**
  **67117 Limburgerhof (DE)**

(56) Entgegenhaltungen:
**EP-A- 0 545 099** **EP-A- 0 626 135**
**EP-A- 0 707 792** **WO-A-97/10716**
**WO-A-97/39628** **WO-A1-97/39630**
**GB-A- 2 267 644**

- **DATABASE CHEMABS [Online] CHEMICAL ABSTRACTS SERVICE, COLUMBUS, OHIO, US; XP002327639 gefunden im STN-INTERNATIONAL Database accession no. 108: 18221 & JP 62 000403 A (ISHIHARA SANGYO) 6. Januar 1987 (1987-01-06)**
- **'Product label for Filan®', 30 Oktober 2008, BASF**
- **'Product label for Scala®', 10 Januar 2007, BASF**
- **C D S TOMLIN: 'The Pesticide Manual', 1997, BRITISH CROP PROTECTION COUNCIL, FARNHAM, UK, ISBN 1901396118 Artikel 'Mepanipyrim', Seiten 784 - 785**
- **'Scala, MAFF 07806, Approval no. 0270/97' THE PESTICIDES REGISTER Nr. 3, März 1997, UK, Seiten 23 - 24**

Bemerkungen:
Die Akte enthält technische Angaben, die nach dem Eingang der Anmeldung eingereicht wurden und die nicht in dieser Patentschrift enthalten sind.



Printed by Jouve, 75001 PARIS (FR)

## Beschreibung

Die vorliegende Erfindung betrifft fungizide Mischungen zur Bekämpfung von Schadpilzen, die

a) eine Amdiverbindung der Formel I

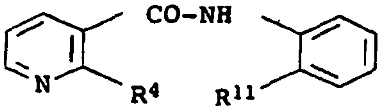

(I)

worin

$R^4$ für Halogen steht und

$R^{11}$ für Phenyl steht, das durch Halogen substituiert ist, und

b) ein Pyrimidinderivat der Formel VI,

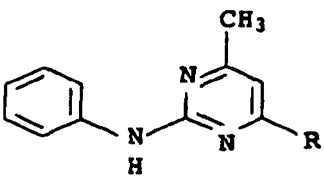

VI

worin R für Methyl, Propin-1-yl oder Cyclopropyl steht,
und gegebenenfalls
c) ein Phthalimidderivat, ausgewählt aus der Gruppe der Verbindungen IIa, IIb und III

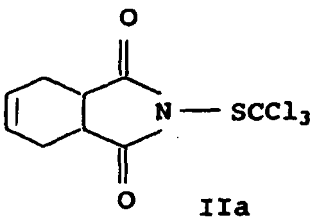

IIa

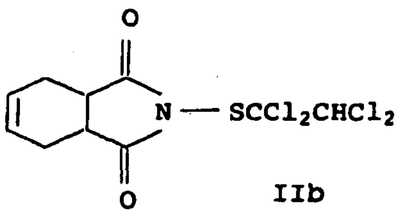

IIb

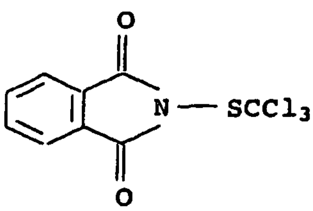

III

und/oder
d) ein Dinitroanilin der Formel IV

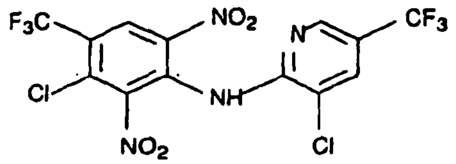

IV

und/oder

e) ein Arylsulfamid der Formeln Va oder Vb

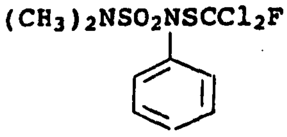

Va

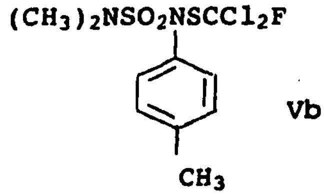

Vb

und/oder

f) wenigstens einen Wirkstoff der Formeln VII or VIII,

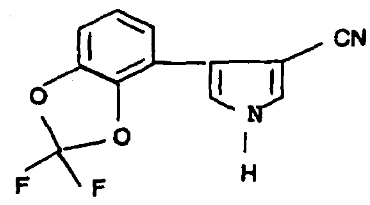

VII

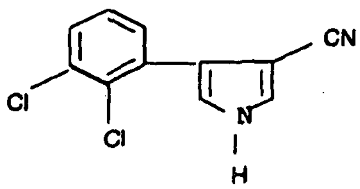

VIII

in einer synergistisch wirksamen Menge enthalten.

In der WO 97/08952 werden fungizide Mischungen beschrieben, die neben Amidverbindungen noch Fenazaquin als weitere Komponenten enthalten. Diese werden als gut wirksam gegen Botrytis beschrieben.

Das Dokument GB-A-2267644 beschreibt Mischungen von Pyrimethanil (VI) mit Flutonalil.

EP-A-0626135 beschreibt Mischungen von Pyrimethanil (VI) oder Mepanipyrim (VI) mit bestimmten Cyclohexancarbonsäureaniliden.

EP-A-0707792 beschreibt Mischungen von Cyprodinil (VI) mit bestimmten Cyclohexancarbonsäureaniliden.

WO-A-9739628 beschreibt Mischungen von Amiden der Formel (I) mit Hydroxyaniliden.

WO-A-9710716 beschreibt Mischungen von Amiden der Formel (I) mit Strobilurinfungiziden.

Die Amidverbindungen der Formel I sind an sich bekannt und in der Literatur beschrieben (EP-A 545 099).

Die US-A 2,553,770; 2,553,771; 2,553,776 beschreiben die Verbindungen IIa (common name :captan) und III (common name: folpet), deren Herstellung und deren Wirkung gegen Schadpilze. Die Verbindung IIb (common name: captafol) ist in Phytopathology 52(1962), 52, 754 beschrieben.

Verbindung IV, ihre Herstellung und ihre Verwendung (*CAS RN 79622-59-6,* common name: Fluazinam) sind auch in der Literatur beschrieben.

Die Verbindungen Va und Vb sind unter den common names Dichlofluanid bzw. Tolylfluanid bekannt und im deutschen Patent 1193498 beschrieben

Ebenfalls bekannt sind die Pyrimidinderivate VI, deren Herstellung und deren Wirkung gegen Schadpilze [R = Methyl: DD-A 151 404 (common name: Pyrimethanil); R = 1-Propinyl: EP-A 224 339 (common name: Mepanipyrim); R=Cyclopropyl: EP-A 310 550].

Die Verbindung VII ist aus K. Gehmann, R. Nyfeler, A.J. Leadbeater, D. Nevill und D. Sozzi, Proceedings of the Brighton Crop Protection Conference, Pests and Diseases 1990, Vol. 2, S. 399 bekannt (common name: Fludioxinil) und kommerziell im Handel von Fa. Novartis erhältlich.

Die Verbindung VIII ist aus D. Nevill, R. Nyfeler, D. Sozzi, Proceedings of the Brighton Crop Protection Conference, Pests and Diseases 1988, Vol. 1, S. 65 bekannt (common name: Fenpiclonil).

Im Hinblick auf eine Senkung der Aufwandmengen und eine Verbesserung des Wirkungsspektrums der bekannten Verbindungen lagen der vorliegenden Erfindung Mischungen zugrunde, die bei verringerter Gesamtmenge an ausgebrachten Wirkstoffen eine verbesserte Wirkung gegen Schadpilze aufweisen (synergistische Mischungen).

Demgemäß wurden die eingangs definierten Mischungen gefunden. Es wurde außerdem gefunden, daß sich bei gleichzeitiger, und zwar gemeinsamer oder getrennter Anwendung der Verbindungen I und der Verbindungen II bis VIII oder bei Anwendung der Verbindungen I und der Verbindungen II bis VIII nacheinander Schadpilze besser bekämpfen lassen, als mit den Verbindungen I oder II bis VIII allein.

Die erfindungsgemäßen Mischungen wirken synergistisch und sind daher zur Bekämpfung von Schadpilzen und insbesondere von Botrytis-Spezies besonders geeignet.

Im Rahmen der vorliegenden Erfindung steht Halogen für Fluor, Chlor, Brom und Jod und insbesondere für Fluor, Chlor und Brom.

Der Ausdruck "Alkyl" umfaßt geradkettige und verzweigte Alkylgruppen. Vorzugsweise handelt es sich dabei um geradkettige oder verzweigte $C_1$-$C_{12}$-Alkyl- und insbesondere $C_1$-$C_6$-Alkylgruppen. Beispiele für Alkylgruppen sind Alkyl wie insbesondere Methyl, Ethyl, Propyl, 1-Methylethyl, Butyl, 1-Methylpropyl, 2-Methylpropyl 1,1-Dimethylethyl, n-Pentyl, 1-Methylbutyl, 2-Methylbutyl, 3-Methylbutyl, 1,2-Dimethylpropyl, 1,1-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,2-Dimethylbutyl, 1,3-Dimethylbutyl, 2,3-Dimethylbutyl, 1,1-Dimethylbutyl, 2,2-Dimethylbutyl, 3,3-Dimethylbutyl, 1,1,2-Trimethylpropyl, 1,2,2-Trimethylpropyl, 1-Ethylbutyl, 2-Ethylbutyl, 1-Ethyl-2-methylpropyl, n-Heptyl, 1-Methylhexyl, 1-Ethylpentyl, 2-Ethylpentyl, 1-Propylbutyl, Octyl, Decyl, Dodecyl.

Brauchbare Amidverbindungen der Formel I sind in der EP-A-545 099 und 589 301, auf die hiermit in vollem Umfang Bezug genommen wird, genannt.

Die Herstellung der Amidverbindungen der Formel I ist beispielsweise aus der EP-A-545 099 oder 589 301 bekannt oder kann nach analogen Verfahren erfolgen.

Um die synergistische Wirkung zu entfalten, genügt bereits ein geringer Anteil an Amidverbindung der Formel I. Vorzugsweise werden Amidverbindung und Wirkstoff der Formel II und/oder III bis VIII in einem Gewichtsverhältnis im Bereich von 50:1 bis 1:50, insbesondere 10:1 bis 1:10 eingesetzt. Dabei ist es auch möglich, ternäre Mischungen zu verwenden, die neben Amidverbindungen I sowohl Verbindungen II als auch eine oder mehrere Verbindungen III bis VIII enthalten. In derartigen Mischungen liegt das Mischungsverhältnis der Verbindungen II und III bis VIII untereinander in der Regel im Bereich von 50:1 bis 1:50, vorzugsweise 10:1 bis 1:10.

Die Verbindungen IV, VI, VII und VIII sind wegen des basischen Charakters der in ihnen enthaltenden Stickstoffatome in der Lage, mit anorganischen oder organischen Säuren oder mit Metallionen Salze oder Addukte zu bilden.

Beispiele für anorganische Säuren sind Halogenwasserstoffsäuren wie Fluorwasserstoff, Chlorwasserstoff, Bromwasserstoff und Jodwasserstoff, Schwefelsäure, Phosphorsäure und Salpetersäure.

Als organischen Säuren kommen beispielsweise Ameisensäure, Kohlensäure und Alkansäuren wie Essigsäure, Trifluoressigsäure, Trichloressigsäure und Propionsäure sowie Glycolsäure, Thiocyansäure, Milchsäure, Bernsteinsäure, Zitronensäure, Benzoesäure, Zimtsäure, Oxalsäure, Alkylsulfonsäuren (Sulfonsäuren mit geradkettigen oder verzweigten Alkylresten mit 1 bis 20 Kohlenstoffatomen), Arylsulfonsäuren oder -disulfonsäuren (aromatische Reste wie Phenyl und Naphthyl welche eine oder zwei Sulfonsäuregruppen tragen), Alkylphosphonsäuren (Phosphonsäuren mit geradkettigen oder verzweigten Alkylresten mit 1 bis 20 Kohlenstoffatomen), Arylphosphonsäuren oder -diphosphonsäuren (aromatische Reste wie Phenyl und Naphthyl welche eine oder zwei Phosphonsäurereste tragen), wobei die Alkyl- bzw. Arylreste weitere Substituenten tragen können, z.B. p-Toluolsulfonsäure, Salizylsäure, p-Aminosalizylsäure, 2-Phenoxybenzoesäure, 2-Acetoxybenzoesäure etc.

Als Metallionen kommen insbesondere die Ionen der Elemente der ersten bis achten Nebengruppe, vor allem Chrom, Mangan, Eisen, Kobalt, Nickel, Kupfer, Zink und daneben der zweiten Hauptgruppe, vor allem Calcium und Magnesium, der dritten und vierten Hauptgruppe, insbesondere Aluminium, Zinn und Blei in Betracht. Die Metalle können dabei gegebenenfalls in verschiedenen ihnen zukommenden Wertigkeiten vorliegen.

Bevorzugt setzt man bei der Bereitstellung der Mischungen die reinen Wirkstoffe I und II bis VIII ein, denen man weitere Wirkstoffe gegen Schadpilze oder gegen andere Schädlinge wie Insekten, Spinntiere oder Nematoden oder auch herbizide oder wachstumsregulierende Wirkstoffe oder Düngemittel beimischen kann.

Die Mischungen aus den Verbindungen I und II und/oder III bis VIII bzw. die Verbindungen I und II und/oder

III bis VIII gleichzeitig, gemeinsam oder getrennt angewandt, zeichnen sich durch eine hervorragende Wirkung gegen ein breites Spektrum von pflanzenpathogenen Pilzen, insbesondere aus der Klasse der Ascomyceten, Basidiomyceten, Phycomyceten und Deuteromyceten aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen, Tomaten, Kartoffeln und Kürbisgewächse), Gerste, Gras, Hafer, Bananen, Kaffee, Mais, Obstpflanzen, Reis, Roggen, Soja, Wein, Weizen, Zierpflanzen, Zuckerrohr sowie an einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Uncinula necator an Reben, Puccinia-Arten an Getreide, Rhizoctonia-Arten an Baumwolle, Reis und Rasen, Ustilago-Arten an Getreide und Zuckerrohr, Venturia inaequalis (Schorf) an Äpfeln, Helminthosporium-Arten an Getreide, Septoria nodorum an Weizen, Botrytis cinerea (Grauschimmel) an Erdbeeren, Gemüse, Zierpflanzen und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Plasmopara viticola an Reben, Pseudoperonospora-Arten in Hopfen und Gurken, Alternaria-Arten an Gemüse und Obst, Mycosphaerella-Arten in Bananen sowie Fusarium- und Verticillium-Arten.

Besonders bevorzugt sind die erfindungsgemäßen Mischungen zur Bekämpfung von Botrytis-Spezies in Reben- und Gemüsekulturen sowie in Zierpflanzen einsetzbar.

Die Verbindungen I und II und/oder III bis VIII können gleichzeitig, und zwar gemeinsam oder getrennt, oder nacheinander aufgebracht werden, wobei die Reihenfolge bei getrennter Applikation im allgemeinen keine Auswirkung auf den Bekämpfungserfolg hat.

Die Aufwandmengen der erfindungsgemäßen Mischungen liegen, vor allem bei landwirtschaftlichen Kulturflächen, je nach Art des gewünschten Effekts bei 0,01 bis 8 kg/ha, vorzugsweise 0,1 bis 5_kg/ha, insbesondere 0,2 bis 3,0 kg/ha.

Die Aufwandmengen liegen dabei für die Verbindungen I bei 0,01 bis 2,5 kg/ha, vorzugsweise 0,05 bis 2,5 kg/ha, insbesondere 0,1 bis 1,0 kg/ha.

Die Aufwandmengen für die Verbindungen II und/oder III bis VIII liegen entsprechend bei 0,01 bis 10 kg/ha, vorzugsweise 0,05 bis 5 kg/ha, insbesondere 0,05 bis 2,0 kg/ha.

Bei der Saatgutbehandlung werden im allgemeinen Aufwandmengen an Mischung von 0,001 bis 250 g/kg Saatgut, vorzugsweise 0,01 bis 100 g/kg, insbesondere 0,01 bis 50 g/kg verwendet.

Sofern für Pflanzen pathogene Schadpilze zu bekämpfen sind, erfolgt die getrennte oder gemeinsame Applikation der Verbindungen I und II und/oder III bis VIII oder der Mischungen aus den Verbindungen I und II und/oder III bis VIII durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I und II und/oder III bis VIII können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in bekannter Weise hergestellt, z.B. durch Verstrecken des Wirkstoffs mit Lösungsmitteln und/oder Trägerstoffen, gewünschtenfalls unter Verwendung von Emulgiermitteln und Dispergiermitteln, wobei im Falle von Wasser als Verdünnungsmittel auch andere organische Lösungsmittel als Hilfslösungsmittel verwendet werden können. Als Hilfsstoffe kommen dafür im wesentlichen in Betracht: Lösungsmittel wie Aromaten (z.B. Xylol), chlorierte Aromaten (z.B. Chlorbenzole), Paraffine (z.B. Erdölfraktionen), Alkohole (z.B. Methanol, Butanol), Ketone (z.B. Cyclohexanon), Amine (z.B. Ethanolamin, Dimethylformamid) und Wasser; Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel wie nichtionogene und anionische Emulgatoren (z.B. Polyoxyethylen-Fettalkohol-Ether, Alkylsulfonate und Arylsulfonate) und Dispergiermittel wie Ligninsulfitablaugen und Methylcellulose.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Heptaund Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylenalkylether, Laurylalkoholpolyglycoletheracetat, Sorbitester, Lignin-Sulfitablaugen oder

Methylcellulose in Betracht.

Pulver Streu- und Stäubemittel können durch Mischen oder gemeinsames Vermahlen der Verbindungen I oder II und/oder III bis VIII oder der Mischung aus den Verbindungen I und II und/oder III bis VIII mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I oder II und/oder III bis VIII bzw. der Mischung aus den Verbindungen I und II und/oder III bis VIII. Die Wirkstoffe werden dabei in einer Reinheit von 90% bis 100%, vorzugsweise 95% bis 100% (nach NMR-Spektrum oder HPLC) eingesetzt.

Die Anwendung der Verbindungen I und II und/oder III bis VIII, der Mischungen oder der entsprechenden Formulierungen erfolgt so, daß man die Schadpilze, deren Lebensraum oder die von ihnen freizuhaltenden Pflanzen, Samen, Böden, Flächen, Materialien oder Räume mit einer fungizid wirksamen Menge der Mischung, bzw. der Verbindungen I und II und/oder III bis VIII bei getrennter Ausbringung, behandelt.

Die Anwendung kann vor oder nach dem Befall durch die Schadpilze erfolgen.

Beispiele für solche Zubereitungen, welche die Wirkstoffe enthalten, sind:

I. eine Lösung aus 90 Gew.-Teilen der Wirkstoffe und 10 Gew.-Teilen N-Methylpyrrolidon, die zur Anwendung in Form kleinster Tropfen geeignet ist;

II. eine Mischung aus 20 Gew.-Teilen der Wirkstoffe, 80 Gew.-Teilen Xylol, 10 Gew.-Teilen des Anlagerungsproduktes von 8 bis 10 Mol Ethylenoxid an 1 Mol Ölsäure-N-monoethanolamid, 5 Gew.-Teilen Calciumsalz der Dodecylbenzolsulfonsäure, 5 Gew.-Teilen des Anlagerungsproduktes von 40 Mol Ethylenoxid an 1 Mol Ricinusöl; durch feines Verteilen der Lösung in Wasser erhält man eine Dispersion;

III. eine wäßrige Dispersion aus 20 Gew.-Teilen der Wirkstoffe, 40 Gew.-Teilen Cyclohexanon, 30 Gew.-Teilen Isobutanol, 20 Gew.-Teilen des Anlagerungsproduktes von 40 Mol Ethylenoxid an 1 Mol Ricinusöl;

IV. eine wäßrige Dispersion aus 20 Gew.-Teilen der Wirkstoffe, 25 Gew.-Teilen Cyclohexanol, 65 Gew.-Teilen einer Mineralölfraktion vom Siedepunkt 210 bis 280°C und 10 Gew.-Teilen des Anlagerungsproduktes von 40 Mol Ethylenoxid an 1 Mol Ricinusöl;

V. eine in einer Hammermühle vermahlene Mischung aus 80 Gew.-Teilen der Wirkstoffe, 3 Gew.-Teilen des Natriumsalzes der Diisobutylnaphthalin-1-sulfonsäure, 10 Gew.-Teilen des Natriumsalzes einer Ligninsulfonsäure aus einer Sulfitablauge und 7 Gew.-Teilen pulverförmigem Kieselsäuregel; durch feines Verteilen der Mischung in Wasser erhält man eine Spritzbrühe;

VI. eine innige Mischung aus 3 Gew.-Teilen der Wirkstoffe und 97 Gew.-Teilen feinteiligem Kaolin; dieses Stäubemittel enthält 3 Gew.-% Wirkstoff;

VII. eine innige Mischung aus 30 Gew.-Teilen der Wirkstoffe, 92 Gew.-Teilen pulverförmigem Kieselsäuregel und 8 Gew.-Teilen Paraffinöl, das auf die Oberfläche dieses Kieselsäuregels gesprüht wurde; diese Aufbereitung gibt dem Wirkstoff eine gute Haftfähigkeit;

VIII. eine stabile wäßrige Dispersion aus 40 Gew.-Teilen der Wirkstoffe, 10 Gew.-Teilen des Natriumsalzes eines Phenolsulfonsäure-Harnstoff-Formaldehyd-Kondensates, 2 Gew.-Teilen Kieselgel und 48 Gew.-Teilen Wasser, die weiter verdünnt werden kann;

IX. eine stabile ölige Dispersion aus 20 Gew.-Teilen der Wirkstoffe, 2 Gew.-Teilen des Calciumsalzes der Dodecylbenzolsulfonsäure, 8 Gew.-Teilen Fettalkohol-polyglykolether, 20 Gew.-Teilen des Natriumsalzes eines Phenolsulfonsäure-Harnstoff-Formaldehydkondensates und 88 Gew.-Teilen eines paraffinischen Mineralöls.

Anwendungsbeispiel

Die synergistische Wirkung der erfindungsgemäßen Mischungen läßt sich durch die folgenden Versuche zeigen:

Die Wirkstoffe werden getrennt oder gemeinsam als 10%ige Emulsion in einem Gemisch aus 63 Gew.-% Cyclohexanon und 27 Gew.-% Emulgator aufbereitet und entsprechend der gewünschten Konzentration mit Wasser verdünnt.

Die Auswertung erfolgt durch Feststellung der befallenen Blattflächen in Prozent. Diese Prozent-Werte werden in Wirkungsgrade umgerechnet. Der Wirkungsgrad (**W**) wird nach der Formel von Abbot wie folgt bestimmt:

$$W = (1 - \alpha) \cdot 100/\beta$$

α entspricht dem Pilzbefall der behandelten Pflanzen in % und
β entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 wiesen die behandelten Pflanzen keinen Befall auf.
Die zu erwartenden Wirkungsgrade der Wirkstoffmischungen wurden nach der Colby Formel [R.S. Colby, Weeds 15, 20-22 (1967)] ermittelt und mit den beobachteten Wirkungsgraden verglichen.

$$\text{Colby Formel: } E = x + y - x \cdot y/100$$

E zu erwartender Wirkungsgrad, ausgedrückt in % der unbehandelten Kontrolle, beim Einsatz der Mischung aus den Wirkstoffen A und B in den Konzentrationen a und b
x der Wirkungsgrad, ausgedrückt in % der unbehandelten Kontrolle, beim Einsatz des Wirkstoffs A in der Konzentration a
y der Wirkungsgrad, ausgedrückt in % der unbehandelten Kontrolle, beim Einsatz des Wirkstoffs B in der Konzentration b

Anwendungsbeispiel 1 -Wirksamkeit gegen Botrytis cinerea an Paprikablättem

Paprikasämlinge der Sorte "Neusiedler Ideal Elite" wurden, nachdem sich 4 - 5 Blätter gut entwicklt hatten, mit einer wäßrigen Wirkstoffaufbereitung, die aus einer Stammlösung aus 10 % Wirkstoff, 63 % Cyclohexanon und 27 % Emulgiermittel angesetzt wurde, bis zur Tropfnässe besprüht. Am nächsten Tag wurden die behandelten Pflanzen mit einer Sporensuspension von Botrytis cinerea, die 1.7 x $10^6$ Sporen/ml in einer 2 %igen wäßrigen Biomalzlösung enthielt, inokuliert. Anschließend wurden die Versuchspflanzen in eine Klimakammer mit 22 bis 24°C und hoher Luftfeuchtigkeit gestellt. Nach 5 Tagen konnte das Ausmaß des Pilzbefalls auf den Blättern visuell in % ermittelt werden.
Als Verbindungen der Formel I wurden folgende Komponenten eingesetzt:

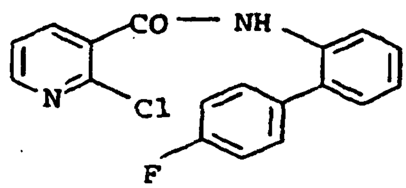
I.1

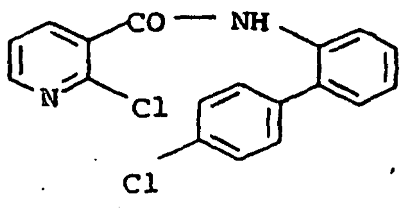
I.2

Anwendungsbeispiel 2 -Wirksamkeit gegen Botrytis cinerea an Paprikaschoten

Scheiben von grünen Paprikaschoten wurden mit einer wäßrigen Wirkstoffaufbereitung, die aus einer Stammlösung aus 10 % Wirkstoff, 63 % Cyclohexanon und 27 % Emulgiermittel angesetzt wurde, tropfnaß besprüht. 2 Stunden nach dem Antrocknen des Spritzbelages wurden die Fruchtscheiben mit einer Sporensuspension von Botrytis cinerea, die 1,7 x $10^8$ Sporen pro ml einer 2 %igen Biomalzlösung enthielt, inokuliert. Die inokulierten Fruchtscheiben wurden anschließend in feuchten Kammern bei 18°C für 4 Tage inkubiert. Dann erfolgte visuell die Auswertung des Botrytis-Befalls auf den befallenen Fruchtscheiben.

## Patentansprüche

**1.** Fungizide Mischungen, enthaltend als aktive Komponenten

a) eine Amidverbindung der Formel I

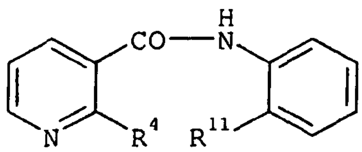

(I)

worin

$R^4$ für Halogen steht und
$R^{11}$ für Phenyl steht, das durch Halogen substituiert ist,

und
b) ein Pyrimidinderivat der Formel VI

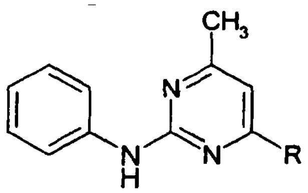

VI

worin R für Methyl, Propin-1-yl oder Cyclopropyl steht, in einer synergistisch wirksamen Menge.

**2.** Fungizide Mischung nach Anspruch 1, welche in zwei Teilen konditioniert ist, wobei der eine Teil die Amidverbindung I in einem festen oder flüssigen Träger enthält und der andere Teil Pyrimidinderivat der Formel VI in einem festen oder flüssigen Träger enthält.

**3.** Verfahren zur Bekämpfung von Schadpilzen, **dadurch gekennzeichnet, dass** man die Pilze, deren Lebensraum oder die vor Pilzbefall zu schützenden Materialien, Pflanzen, Samen, Böden, Flächen oder Räume mit einer fungiziden Mischung gemäß einem der Ansprüche 1 oder 2 behandelt, wobei die Anwendung der Wirkstoffe Amidverbindung I und Pyrimidinderivat VI gleichzeitig, und zwar gemeinsam oder getrennt, oder nacheinander erfolgen kann.

## Claims

**1.** A fungicidal mixture, comprising as active components

a) an amide compound of the formula I,

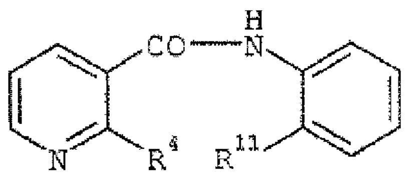

(I)

in which

$R^4$ is halogen and
$R^{11}$ is phenyl which is substituted by halogen,

and
b) a pyrimidine derivative of the formula VI,

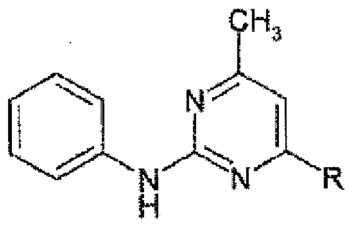

VI

in which R is methyl, propyn-1-yl or cyclopropyl, in a synergistically effective amount.

**2.** The fungicidal mixture according to claim 1, which is conditioned in two parts, one part comprising the amide compound I in a solid or liquid carrier and the other part comprising pyrimidine derivative of the formula VI in a solid or liquid carrier.

**3.** A method for controlling harmful fungi, which comprises treating the fungi, their habitat, or the materials, plants, seeds, soils, areas or spaces to be protected against fungal attack with a fungicidal mixture according to either of claims 1 or 2, where the application of the active ingredients amide compound I and pyrimidine derivative VI may be carried out simultaneously, that is either together or separately, or in succession.

## Revendications

**1.** Mélanges fongicides contenant en tant que composants actifs :

a) un composé amide de la formule I

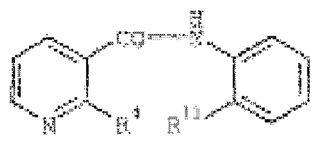

(I)

dans laquelle

$R^4$ représente un halogène et
$R^{11}$ représente un radical phényle substitué par de l'halogène,

et
b) un dérivé de pyrimidine de la formule VI

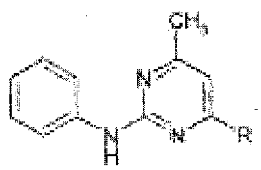

VI

dans laquelle R représente un radical méthyle, propin-1-yle ou cyclopropyle,

en une quantité synergiquement efficace.

2. Mélange fongicide suivant la revendication 1, conditionné en deux parties, où une partie contient le composé amide I dans un excipient solide ou liquide et l'autre partie contient un dérivé de pyrimidine de la formule VI dans un excipient solide ou liquide.

3. Procédé de lutte contre des champignons nuisibles, **caractérisé en ce que** les champignons, leur habitat ou les matériaux, végétaux, semences, sols, surfaces ou espaces à protéger contre l'attaque des champignons sont traités par un mélange fongicide suivant l'une quelconque des revendications 1 ou 2, où l'utilisation des agents actifs que sont le composé amide I et le dérivé de pyrimidine VI peut être effectuée simultanément, ensemble ou séparément, ou bien successivement.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9708952 A
- GB 2267644 A
- EP 0626135 A
- EP 0707792 A
- WO 9739628 A
- WO 9710716 A
- EP 545099 A
- US 2553770 A
- US 2553771 A
- US 2553776 A
- DE 1193498
- DD 151404 A
- EP 224339 A
- EP 310550 A
- EP 589301 A